# EUROPEAN PATENT APPLICATION

(11) **EP 2 945 351 A1**
(43) Date of publication of application: **18.11.2015**
(21) Application number: 13870633.8
(22) Date of filing: 23.10.2013
(51) Int. Cl.: H04M 1/00, H04M 3/42

(54) **CALL CONTROL DEVICE, SERVER, AND PROGRAM**

(30) Priority: 08.01.2013 JP 2013001368
(71) Applicant: Clarion Co., Ltd., Saitama-shi, Saitama 330-0081 (JP)
(72) Inventor: SUGITA, Muneki, Saitama-shi Saitama 330-0081 (JP); TANAKA, Atsushi, Saitama-shi Saitama 330-0081 (JP)
(74) Representative: Strehl Schübel-Hopf & Partner
(86) International application number: PCT/JP2013/078648
(87) International publication number: WO 2014/109106

(57) **Abstract**

Provided is a call control device capable of putting a call received during driving on hold at more appropriate time depending on magnitude of a driving load. The call control device includes: a hands-free call unit for establishing a hands-free call in cooperation with a mobile terminal device having a telephone function; a transmission unit for transmitting vehicle information; an acquisition unit for acquiring, depending on magnitude of a driving load calculated through use of the vehicle information, holding request information for requesting a call to be put on hold and holding guidance information for delivering voice guidance informing that the call is to be put on hold; and an output unit for outputting the holding guidance information to a speaker. The transmission unit transmits the holding request information and the holding guidance information to the mobile terminal device.

## Description

### Technical Field

The present invention relates to a call control device, a server, and a program. The present invention claims priority to Japanese Patent Application No. 2013-1368 filed on January 8, 2013, the content of which is incorporated herein by reference in designated states where incorporation by reference of literature is allowed.

### Background Art

In Patent Literature 1, there is disclosed a hands-free device for switching, depending on the traveling state of a vehicle, between a hands-free function and a function of putting a user's call on hold.

### Citation List

### Patent Literature

[PTL 1] JP 2005-203943 A

### Summary of Invention

### Technical Problem

In the above-mentioned technology, when a call is incoming to a mobile phone during a parking operation, the call is automatically answered. Moreover, a hands-free call is executed when a call is incoming to the mobile phone while the vehicle is traveling forward or the vehicle is stopped. However, even when the vehicle is traveling forward (is in a normal traveling state), a large load is imposed on the driver's driving in some cases. If the hands-free call is executed in such a case, the driver's attention is distracted due to the call, and hence it is more desirable that the call be automatically answered.

In view of the above, it is an object of the present invention to provide a call control device capable of putting a call received during driving on hold at more appropriate time depending on magnitude of a driving load.

### Solution to Problem

In order to solve the above-mentioned problem, a call control device according to one embodiment of the present invention includes: a hands-free call unit for establishing a hands-free call in cooperation with a mobile terminal device having a telephone function; a transmission unit for transmitting vehicle information; an acquisition unit for acquiring, depending on magnitude of a driving load calculated through use of the vehicle information, holding request information for requesting a call to be put on hold and holding guidance information for delivering voice guidance informing that the call is to be put on hold; and an output unit for outputting the holding guidance information to a speaker, in which the transmission unit transmits the holding request information and the holding guidance information to the mobile terminal device.

Further, the call control device according to the one embodiment of the present invention further includes: a storage unit for storing the holding guidance information; and a holding information generation unit for generating the holding request information.

Further, in the call control device according to the one embodiment of the present invention, the holding guidance information includes a reason for putting the call on hold.

Further, in the call control device according to the one embodiment of the present invention, the reason for putting the call on hold includes at least one of that a vehicle is travelling at a junction, that the vehicle is travelling at a branch point, that the vehicle is travelling at an entrance/exit of an expressway, that the vehicle is travelling at an intersection, that the vehicle is turning right or left, and that the vehicle is changing lanes.

Further, in the call control device according to the one embodiment of the present invention, the vehicle information includes at least one of pieces of information specifying a vehicle speed, a steering angle, a state of a turn signal, a number of revolutions of an engine, and a current location.

Further, a call control method according to one embodiment of the present invention is a call control method for a call control device for establishing a hands-free call in cooperation with a mobile terminal device, the call control method including: a hands-free call step of establishing, by the call control device, the hands-free call in cooperation with the mobile terminal device having a telephone function; a transmission step of transmitting, by the call control device, vehicle information; an acquisition step of acquiring, by the call control device, depending on magnitude of a driving load calculated through use of the vehicle information, holding request information for requesting a call to be put on hold and holding guidance information for delivering voice guidance informing that the call is to be put on hold; and an output step of outputting, by the call control device, the holding guidance information to a speaker, in which the transmission step includes transmitting the holding request information and the holding guidance information to the mobile terminal device.

Further, the call control method according to the one embodiment of the present invention further includes: a storage step of storing, by the call control device, the holding guidance information; and a holding information generation step of generating, by the call control device, the holding request information.

Further, in the call control method according to the one embodiment of the present invention, the holding guidance information includes a reason for putting the call on hold.

Further, in the call control method according to the one embodiment of the present invention, the reason for putting the call on hold includes at least one of that a vehicle is travelling at a junction, that the vehicle is travelling at a branch point, that the vehicle is travelling at an entrance/exit of an expressway, that the vehicle is travelling at an intersection, that the vehicle is turning right or left, and that the vehicle is changing lanes.

Further, in the call control method according to the one embodiment of the present invention, the vehicle information includes at least one of pieces of information specifying a vehicle speed, a steering angle, a state of a turn signal, a number of revolutions of an engine, and a current location.

### Advantageous Effects of Invention

According to the one embodiment of the present invention, it is possible to put the call received during driving on hold at more appropriate time depending on the magnitude of the driving load.

### Brief Description of Drawings

FIG. 1 is a diagram for illustrating a schematic configuration of a call control system according to one embodiment of the present invention.
FIG. 2 is a diagram for illustrating functional blocks of each of devices according to the one embodiment of the present invention.
FIG. 3 is a diagram for illustrating a hardware configuration of a navigation device according to the one embodiment of the present invention.
FIG. 4 is a diagram for illustrating a hardware configuration of a server according to the one embodiment of the present invention.
FIG. 5 is a diagram for illustrating a hardware configuration of a mobile terminal device according to the one embodiment of the present invention.
FIG. 6 is a sequence diagram for illustrating call control according to the one embodiment of the present invention.
FIG. 7 is a flowchart for illustrating driving load determination processing according to the one embodiment of the present invention.
FIG. 8 is a flowchart for illustrating call control processing according to the one embodiment of the present invention.
FIG. 9 is a flowchart for illustrating call holding processing according to the one embodiment of the present invention.
FIG. 10 is a sequence diagram for illustrating call control according to another embodiment of the present invention.
FIG. 11 is a flowchart for illustrating call control processing according to the another embodiment of the present invention.
FIG. 12 is a table for showing guidance information according to still another embodiment of the present invention.

### Description of Embodiments

Now, a description is given of one embodiment of the present invention.

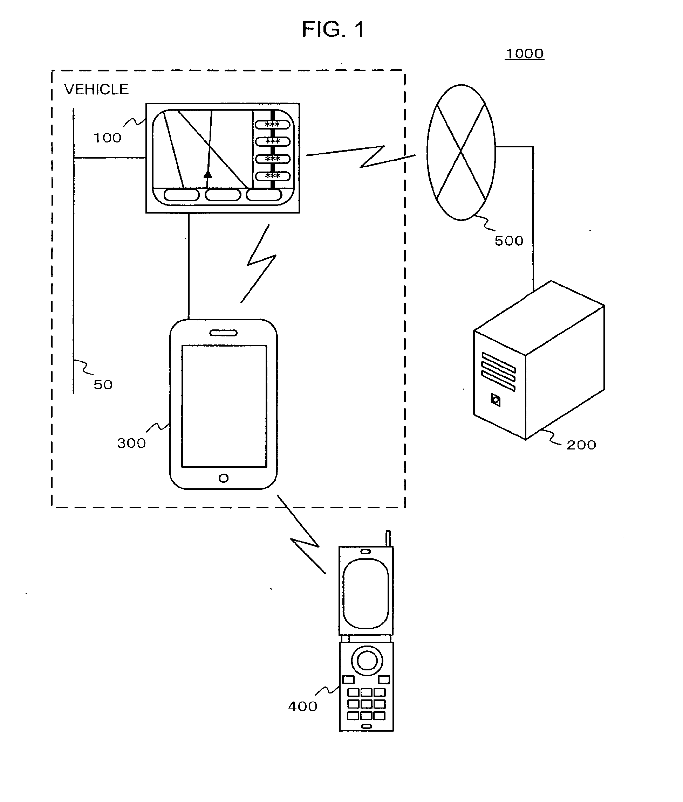

FIG. 1 is a diagram for illustrating a schematic configuration of a call control system 1000 according to a first embodiment of the present invention. As illustrated in FIG. 1, the call control system 1000 includes a navigation device 100 to function as a call control device, a server 200 capable of communicating to and from the navigation device 100 over a network 500, and a mobile terminal device 300 (e.g., a mobile phone or a smartphone) capable of communicating to and from the navigation device 100 with a short-range wireless communication standard such as Bluetooth (trademark). Note that, the communication between the navigation device 100 and the mobile terminal device 300 is not limited to wireless communication, and the communication therebetween may be established in a wired manner.

In this context, the navigation device 100 refers to a device having what is called a navigation function, such as a route search, route guidance, and provision of traffic information.

In the call control system 1000, the navigation device 100 transmits vehicle information to the server 200 regularly (e.g. , at intervals of a few seconds) . Further, depending on the vehicle information, the server 200 generates information for controlling a call of the mobile terminal device 300 (call holding information and held-call resumption information). Further, when the navigation device 100 executes a hands-free telephone function in cooperation with the mobile terminal device 300, the navigation device 100 outputs, to an in-vehicle speaker, voice guidance for informing that the call is to be put on hold. Further, the navigation device 100 transmits to the mobile terminal device 300 the call holding information and the like received from the server 200. In the mobile terminal device 300, the call is put on hold based on the received call holding information and the like. Note that, details of processing to be executed by the devices of the navigation device 100 are described later.

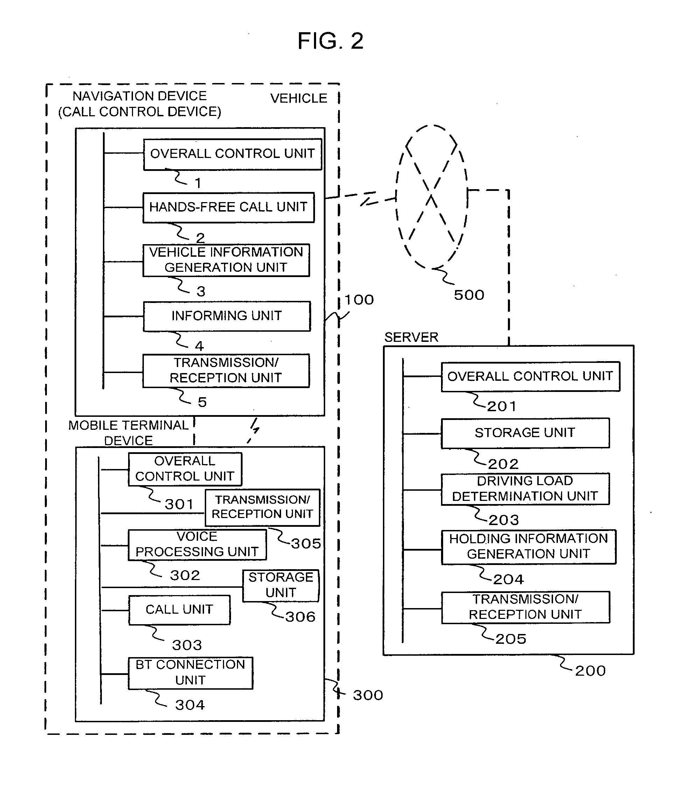

FIG. 2 is a diagram for illustrating functional blocks of the navigation device 100, the server 200, and the mobile terminal device 300. As illustrated in FIG. 2, the navigation device 100 includes an overall control unit 1, a hands-free call unit 2, a vehicle information generation unit 3, an informing unit 4, and a transmission/reception unit 5.

The overall control unit 1 is a central functional unit for performing various types of processing of the navigation device 100. Specifically, the overall control unit 1 outputs information and instruction signals that are acquired from other devices (such as a storage device 18 and a voice input/output device 20) built in the navigation device 100, sensors (such as a vehicle speed sensor 28 and a gyro sensor 29), and external devices (such as the server 200 and the mobile terminal device 300) to a predetermined functional unit, device, and sensor corresponding to the type and processing details of the information and instruction signals.

The hands-free call unit 2 is a functional unit for realizing a hands-free call made in a vehicle. Specifically, the hands-free call unit 2 receives voice information of the other person on the phone from the mobile terminal device 300 that has been successfully paired with the navigation device 100 by Bluetooth, and outputs the received voice information to an in-vehicle speaker 22. Further, the hands-free call unit 2 transmits to the mobile terminal device 300 voice information of a person on the phone (e.g. , a driver) that has been acquired through an in-vehicle microphone 21.

The vehicle information generation unit 3 is a functional unit for acquiring over an in-vehicle network 50 pieces of information for specifying a vehicle speed, a steering angle, a state of a turn signal, the number of revolutions of an engine, and a current location of a vehicle (hereinafter referred to as "current location information") to generate the vehicle information including those pieces of information.

The informing unit 4 is a functional unit for outputting predetermined voice guidance to the in-vehicle speaker 22. Specifically, the informing unit 4 outputs to the in-vehicle speaker 22 holding guidance information and held-call resumption guidance information received from the server 200.

The transmission/reception unit 5 is a functional unit for transmitting the vehicle information to the server 200. Further, the transmission/reception unit 5 receives the call holding information and the held-call resumption information from the server 200.

Further, as illustrated in FIG. 2, the server 200 includes an overall control unit 201, a storage unit 202, a driving load determination unit 203, a holding information generation unit 204, and a transmission/reception unit 205.

The overall control unit 201 is a central functional unit for performing various types of processing of the server 200. Specifically, for example, the overall control unit 201 outputs information acquired from an external device (e.g., the navigation device 100) over the network 500 and an instruction received through an input device to a predetermined functional unit and device.

The storage unit 202 stores map information, workload information obtained by quantifying magnitude of a driving load imposed on the driver, predetermined voice guidance information (the holding guidance information and the held-call resumption guidance information), and the like.

Note that, the workload information refers to information in which a predetermined cause of a load, such as a driver's driving operation and a specific location on a map (e.g., an entrance/exit of an expressway, a junction, a branch point, and an intersection), and the magnitude of the driving load are associated with each other.

The driving load determination unit 203 is a functional unit for determining the magnitude of the driver's driving load. Specifically, the driving load determination unit 203 uses the vehicle information and the workload information to calculate the magnitude of the driving load imposed on the driver at the current time or at a predetermined period of time after the current time (e.g. , a few tens of seconds after the current time). Further, the driving load determination unit 203 determines whether or not the calculated magnitude of the driving load is larger than a predetermined threshold.

The holding information generation unit 204 is a functional unit for generating the call holding information and the held-call resumption information. Specifically, the holding information generation unit 204 generates the call holding information when the magnitude of the driving load is larger than the predetermined threshold, and generates the held-call resumption information when the magnitude of the driving load is smaller than the predetermined threshold.

Note that, the call holding information includes holding request information for requesting the mobile terminal device 300 to put the call on hold and holding guidance information for informing that the call is to be put on hold. Further, the held-call resumption information includes held-call resumption request information for requesting the mobile terminal device 300 to resume the held call and resumption guidance information for informing that the held call is to be resumed.

The transmission/reception unit 205 is a functional unit for transmitting to the vehicle the call holding information and the held-call resumption information that have been generated by the holding information generation unit 204.

Further, as illustrated in FIG. 2, the mobile terminal device 300 includes an overall control unit 301, a voice processing unit 302, a call unit 303, a BT connection unit 304, a transmission/reception unit 305, and a storage unit 306.

The overall control unit 301 is a central functional unit for performing various types of processing of the mobile terminal device 300. The overall control unit 301 outputs, for example, information acquired from the external device (e.g., the navigation device 100) over the network 500 and a user's instruction received through a touch-panel display unit to a predetermined functional unit or the like.

The voice processing unit 302 is a functional unit for performing predetermined conversion processing on acquired voice information. Specifically, the voice processing unit 302 performs A/D conversion processing on the voice of the person on the phone that has been acquired through a microphone 316. Further, the voice processing unit 302 performs D/A conversion processing on the voice information of the other person on the phone that has been acquired through the transmission/reception unit 305.

The call unit 303 is a functional unit for realizing a voice call between the mobile terminal device 300 and another telephone device 400 (fixed phone, mobile phone, smartphone, or the like) having a telephone function. Specifically, the call unit 303 transmits the voice information of the person on the phone on which the voice processing unit 302 has performed the A/D conversion processing, to another telephone device 400 through the transmission/reception unit 305. Further, the call unit 303 outputs to a speaker 317 the voice information of the other person on the phone on which the voice processing unit 302 has performed the D/A conversion.

Note that, when the navigation device 100 and the mobile terminal device 300 are connected to each other in a manner that enables mutual communication so that the hands-free telephone function is executed, the call unit 303 transmits the voice information of the person on the phone that has been received from the navigation device 100, to the other person on the phone through the transmission/reception unit 305. Further, the call unit 303 transmits the voice information of the other person on the phone to the navigation device 100 through the transmission/reception unit 305.

The BT connection unit 304 is a functional unit for establishing, by Bluetooth, short-range wireless communication to and from the external device (e.g., the navigation device 100).

The transmission/reception unit 305 is a functional unit for transmitting and receiving predetermined information to and from the external devices (another telephone device 400 and the navigation device 100). For example, the transmission/reception unit 305 receives the voice information of the other person on the phone from another telephone device 400, and transmits the voice information of the person on the phone to the telephone device 400. Further, the transmission/reception unit 305 transmits to another telephone device 400 the voice information of the person on the phone on which the A/D conversion processing has been performed.

The storage unit 306 is a functional unit for storing address book information such as phone numbers and email addresses, image information, and the like.

Next, a description is given of a hardware configuration of each of the devices of the call control system.

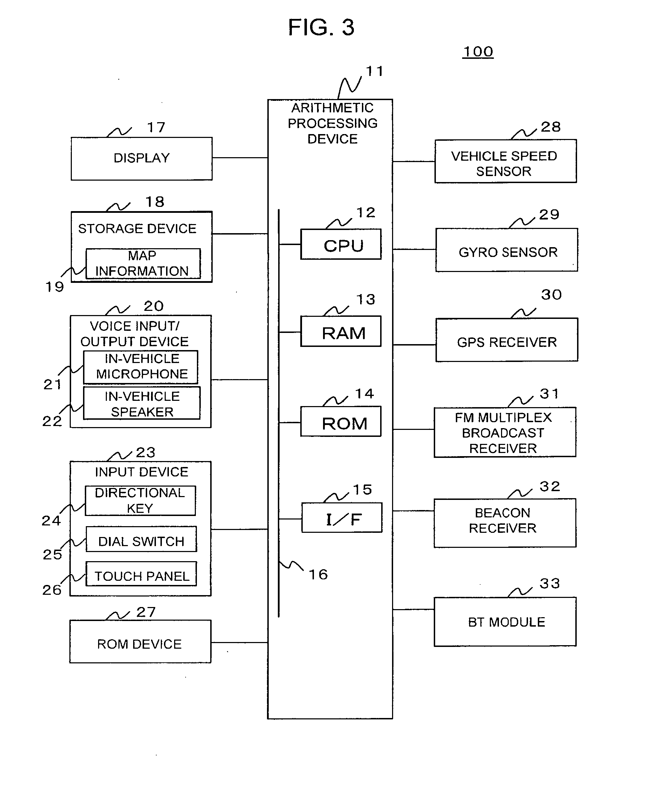

FIG. 3 is a diagram for illustrating a hardware configuration of the navigation device 100. As illustrated in FIG. 3, the navigation device 100 includes an arithmetic processing device 11, a display 17, the storage device 18, the voice input/output device 20, an input device 23, a ROM device 27, the vehicle speed sensor 28, the gyro sensor 29, a GPS receiver 30, an FM multiplex broadcast receiver 31, a beacon receiver 32, and a Bluetooth (BT) module 33. Note that, the devices and sensors are connected to one another by a bus so that data can be exchanged among the devices and sensors.

The arithmetic processing device 11 is a central unit for performing various types of processing of the navigation device 100. For example, the arithmetic processing device 11 uses information acquired from various types of sensors to specify the current location of the vehicle, and uses map information 19 to search for a recommended route connecting a departure location to a destination. Further, the arithmetic processing device 11 generates display information, such as the map information 19, the traffic information, and guidance route information, and voice information for route guidance, and outputs the display information and the voice information to the display 17 and the in-vehicle speaker 22, respectively.

Note that, the arithmetic processing device 11 includes a central processing unit (CPU) 12 for executing various types of processing including a numerical operation and controlling of various devices and sensors, a random access memory (RAM) 13 for temporarily storing a program, data, a result of an arithmetic operation, and the like, a read only memory (ROM) 14 for storing a program, data, and the like, and an interface (I /F) 15 for connecting various types of hardware to the arithmetic processing device 11. Further, the CPU 12, the RAM 13, the ROM 14, and the I/F 15 are connected to one another by a bus 6.

The display 17 is formed of a liquid crystal display, an organic EL display, or the like, and displays graphics information.

The storage device 18 is formed of a recording medium that is at least readable and writable, such as a hard disk drive (HDD) or a non-volatile memory card. Predetermined information such as the map information 19 and the traffic information is stored in the storage device 18.

The voice input/output device 20 includes the in-vehicle microphone 21 serving as a voice input device and the in-vehicle speaker 22 serving as a voice output device. The in-vehicle microphone 21 collects a sound output from the outside of the navigation device 100, such as a voice uttered by a user. Further, the in-vehicle speaker 22 outputs a message for the driver that has been generated by the arithmetic processing device 11, as a voice.

The input device 23 is a device through which the navigation device 100 receives a predetermined instruction from the user, and is formed of a directional key 24, a dial switch 25, a touch panel 26, other hardware switches (not shown), and the like.

The ROM device 27 is formed of a recording medium that is at least readable, such as a CD-ROM, a DVD-ROM, or another read only memory (ROM), or an integrated circuit (IC) card. For example, video information, audio information, music information, or the like are recorded on the ROM device 27.

The vehicle speed sensor 28, the gyro sensor 29, the GPS receiver 30 are used to detect the current location of the vehicle having the navigation device 100 mounted thereon.

The vehicle speed sensor 28 converts the detected number of revolutions of a wheel into a pulse signal, and outputs predetermined information such as the number of pulse signals generated during a predetermined period of time.

The gyro sensor 29 is formed of a fibre optic gyroscope, a vibrating structure gyroscope, or the like, and detects an angular velocity generated by rotation of a moving object.

The GPS receiver 30 receives a signal transmitted from a GPS satellite, and measures a distance between the vehicle and the GPS satellite and a change rate of the distance. The GPS receiver 30 performs this measurement with respect to three or more satellites, to thereby measure the current location, traveling speed, and traveling direction of the vehicle.

The FM multiplex broadcast receiver 31 receives an FM multiplex broadcast signal transmitted from an FM broadcast station, such as vehicle information communication system (VICS: trademark) information, traffic regulation information, service area/parking area (SA/PA) information, parking lot information, and weather information.

The beacon receiver 32 is a receiver such as an optical beacon for performing communication using light or a radio wave beacon for performing communication using radio waves, and receives, for example, VICS information, traffic regulation information, service area/parking area (SA/PA) information, parking lot information, weather information, and an emergency alarm.

The BT module 33 is a module for performing short-range wireless communication using Bluetooth. In the BT module 33, a wireless communication antenna is implemented, and profiles for realizing predetermined functions such as the hands-free telephone function and an audio reproduction function are also implemented.

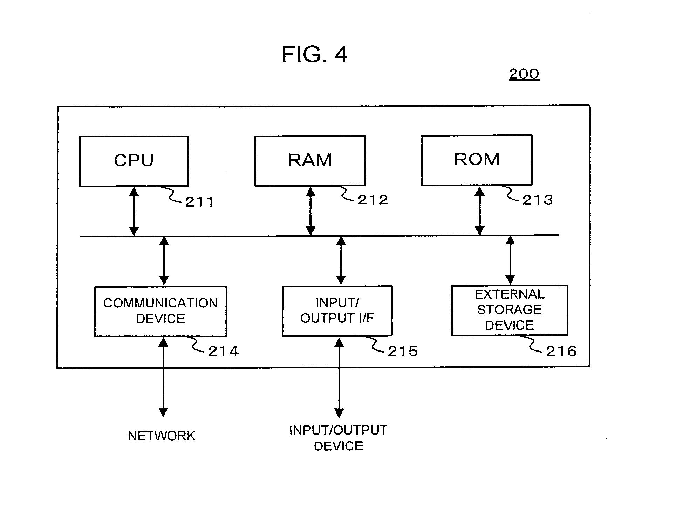

FIG. 4 is a diagram for illustrating a hardware configuration of the server 200. As illustrated in FIG. 4, the server 200 includes a CPU 211 serving as an arithmetic processing device, a memory such as a RAM 212 or a ROM 213, a communication device 214 for communicating to and from another device over a network, an input interface (I/F) 215 for transmitting and receiving data to and from an input device such as a keyboard or a button and an output device such as a monitor, and a storage device 216 such as a hard disk.

The server 200 having the above-mentioned hardware configuration is realized with an information processing device (e.g., a personal computer or a workstation) that operates in accordance with a program.

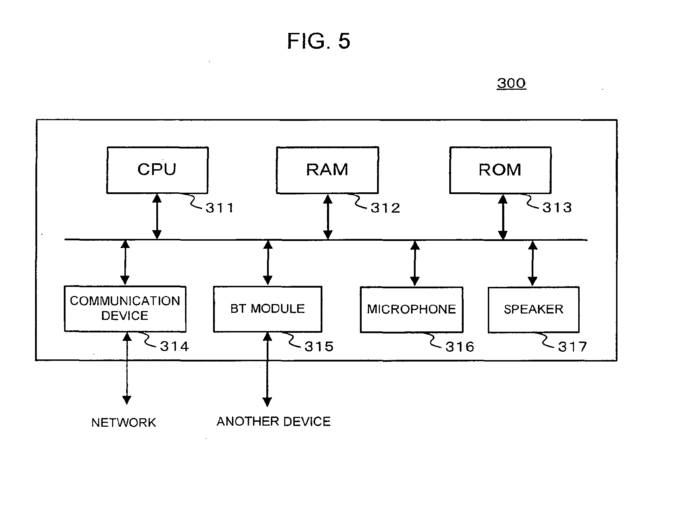

FIG. 5 is a diagram for illustrating a hardware configuration of the mobile terminal device 300. As illustrated in FIG. 5, the mobile terminal device 300 includes a CPU 311 serving as an arithmetic processing device, a memory such as a RAM 312 or a ROM 313, a communication device 314 for communicating to and from another device over a network, and a BT module 315 for performing short-range wireless communication to and from another device by Bluetooth.

The microphone 316 collects a voice uttered by the person on the phone. Further, the speaker 317 outputs the voice information of the other person on the phone on which the D/A conversion processing has been performed. Note that, the BT module is similar to the one described above, and hence a description thereof is omitted.

The mobile terminal device 300 having the above-mentioned hardware configuration is realized with a mobile communication device (e.g., a mobile phone or a smartphone) that has a telephone function and operates in accordance with a program.

Note that, the respective functional units of the server 200, that is, the overall control unit 201, the storage unit 202, the driving load determination unit 203, the holding information generation unit 204, and the transmission/reception unit 205 are realized by the CPU 211 executing predetermined programs loaded onto the memory.

Further, the respective functional units of the mobile terminal device 300, that is, the overall control unit 301, the voice processing unit 302, the call unit 303, the BT connection unit 304, the transmission/reception unit 305, and the storage unit 306 are realized by the CPU 311 executing predetermined programs loaded onto the memory.

The above-mentioned functional blocks of each of the navigation device 100, the server 200, and the mobile terminal device 300 are the ones obtained by classifying functions of each of the devices realized in this embodiment based on their main processing details in order to facilitate understanding of the functions. Further, the present invention is not limited by a method of classifying the functions and their names. The configurations of the functions of each of the devices may be further classified into a larger number of components based on their processing details. The configurations may be further classified into other types of components so that each of the components performs a larger number of pieces of processing.

Further, the functional units of each of the navigation device 100, the server 200, and the mobile terminal device 300 may be constructed with hardware (such as an ASIC). Further, the processing of each of the functional units may be executed by one piece of hardware, or may be executed by a plurality of pieces of hardware.

### [Description of Operation]

Next, a description is given of processing relating to call processing executed among the navigation device 100, the server 200, and the mobile terminal device 300.

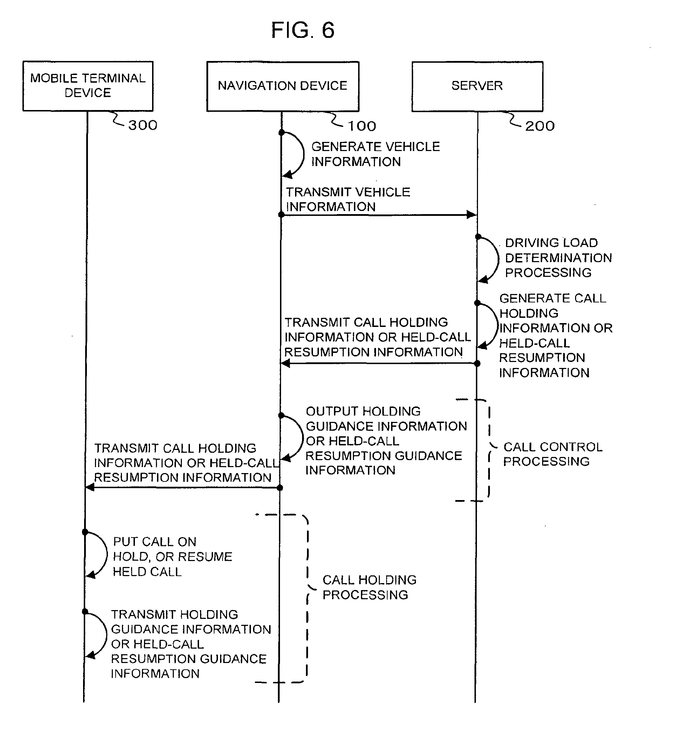

FIG. 6 is a sequence diagram for illustrating a series of processing steps relating to the call control. Note that, the premise of this processing is that the navigation device 100 and the mobile terminal device 300 currently executes the hands-free telephone function in cooperation with each other.

First, the navigation device 100 generates the vehicle information regularly (e.g., at intervals of a few seconds). Specifically, the vehicle information generation unit 3 acquires over the in-vehicle network 50 information on a vehicle operation, such as the steering angle of a steering wheel and the state of the turn signal, information on traveling, such as the vehicle speed and the number of revolutions of the engine, and the current location information (vehicle information), to generate the vehicle information.

Next, the vehicle information generation unit 3 transmits the vehicle information to the server 200 through the transmission/reception unit 5.

Next, the driving load determination unit 203 of the server 200 performs driving load determination processing using the map information, the workload information, and the vehicle information. Note that, details of the driving load determination processing are described later.

Next, the holding information generation unit 204 generates the call holding information or the held-call resumption information depending on a result of the determination, and transmits the call holding information or the held-call resumption information to the navigation device 100 through the transmission/reception unit 205.

Next, the navigation device 100 executes call control processing, and transmits the call holding information or the held-call resumption information to the mobile terminal device 300. Note that, in the call control processing, the holding guidance information or the held-call resumption guidance information is output from the in-vehicle speaker 22. Details of the call control processing are described later.

Next, the call unit 303 of the mobile terminal device 300 executes call holding processing. Note that, in the call holding processing, the call is put on hold or the held call is resumed, and the holding guidance information or the held-call resumption guidance information is transmitted to the telephone device 400 of the other person on the phone. Details of the call holding processing are described later.

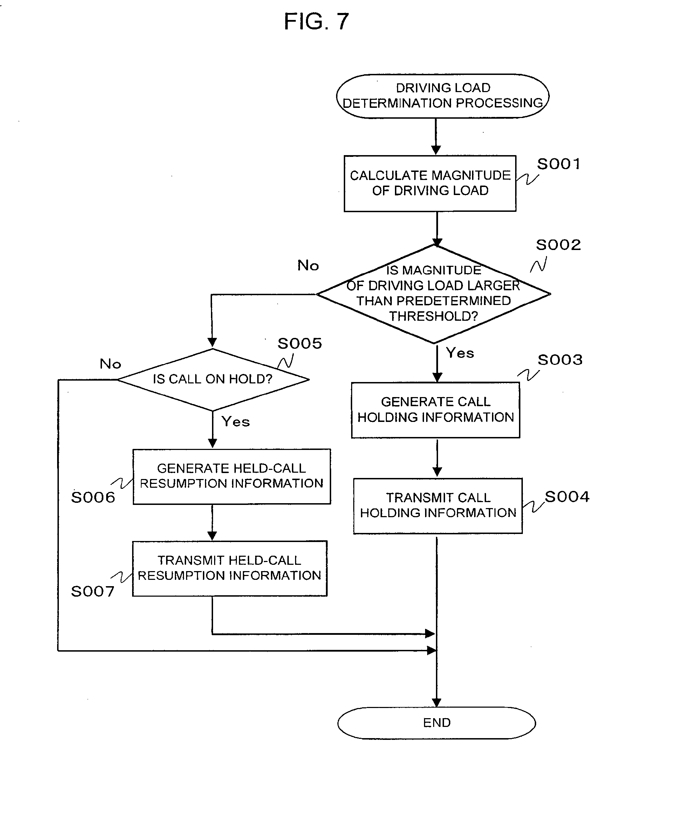

FIG. 7 is a flowchart for illustrating a flow of the driving load determination processing executed by the server 200. The driving load determination processing is started when the server 200 receives the vehicle information from the navigation device 100.

When receiving the vehicle information from the navigation device 100, the driving load determination unit 203 of the server 200 calculates the magnitude of the driving load imposed on the driver (Step S001). Specifically, the driving load determination unit 203 uses the map information, the workload information, and the vehicle speed, the steering angle, the state of the turn signal, the number of revolutions of the engine, and the current location information, which are included in the vehicle information, to calculate the magnitude of the driving load imposed on the driver at the current time or at the predetermined period of time after the current time (e.g., a few tens of seconds after the current time).

Specifically, the driving load determination unit 203 specifies the current location of the vehicle based on the current location information and the map information, and then determines whether or not the specified location is near a cause of the load (e. g. , within a 300-meter range from the load cause such as a junction) . Further, when determining that the specified location is near the junction, the driving load determination unit 203 uses the workload information to specify the magnitude of the load of the load cause "junction", and performs predetermined weighting on the specified magnitude of the load. In this manner, the driving load determination unit 203 calculates the magnitude of the driving load imposed by the driving at the junction (e.g., the magnitude of the driving load may be indicated by any of a numerical value, a level, and high/medium/low).

Further, for example, when the vehicle information includes information indicating an operation of a turn signal, the driving load determination unit 203 determines whether or not the vehicle is traveling near a location corresponding to a cause of the load associated with this driving operation (e.g., an intersection at which the vehicle turns right or left). Note that, whether or not the location is the relevant intersection may be determined by, for example, whether or not the location is the one located on the recommended route and at which such route guidance that the driver is instructed to turn right (or left) is being made. Further, when determining that the vehicle is traveling at the intersection at which the vehicle turns right or left, the driving load determination unit 203 uses the workload information to specify the magnitude of the load of the load cause "right/left turn", and performs predetermined weighting on the specified magnitude of the load. In this manner, the driving load determination unit 203 calculates the magnitude of the driving load imposed by the operation of a right/left turn.

Next, the driving load determination unit 203 determines whether or not the calculated magnitude of the driving load is larger than the predetermined threshold (Step S002). When it is then determined that the magnitude of the driving load is larger than the predetermined threshold (Yes in Step S002), the driving load determination unit 203 advances the processing to Step S003. On the other hand, when it is determined that the magnitude of the driving load is smaller than the predetermined threshold (No in Step S002), the driving load determination unit 203 advances the processing to Step S005.

In Step S003, the holding information generation unit 204 generates the call holding information. Specifically, the holding information generation unit 204 acquires predetermined holding guidance information (e.g., voice guidance such as "The call is temporarily put on hold because the driver's driving load is large.") from the storage unit 202. Further, the holding information generation unit 204 generates the holding request information for requesting the mobile terminal device 300 to put the call on hold. Then, the holding information generation unit 204 generates the call holding information including the holding guidance information and the holding request information.

Next, the holding information generation unit 204 transmits the call holding information to the navigation device 100 through the transmission/reception unit 205 (Step S004), and ends this flow.

Further, in Step S005, the holding information generation unit 204 determines whether or not the call is on hold. Specifically, the holding information generation unit 204 determines the call is on hold when the held-call resumption information is not transmitted after the call holding information is transmitted to the navigation device 100. Note that, whether or not the relevant information is transmittedmay be determined by, for example, storing an information transmission history in the storage unit 202 and referring to this history.

When the call is on hold (Yes in Step S005), the holding information generation unit 204 generates the held-call resumption information including the held-call resumption guidance information (StepS006). Specifically, the holding information generation unit 204 acquires predetermined held-call resumption guidance information (e.g., voice guidance such as "The held call is now resumed.") from the storage unit 202.

Further, the holding information generation unit 204 generates the held-call resumption request information for requesting the mobile terminal device 300 to resume the held call. Then, the holding information generation unit 204 generates the held-call resumption information including the held-call resumption guidance information and the held-call resumption request information, and advances the processing to Step S007. On the other hand, when the call is not on hold (No in Step S005), the holding information generation unit 204 ends the processing of this flow.

In Step S007, the holding information generation unit 204 transmits the held-call resumption information to the navigation device 100 through the transmission/reception unit 205, and ends this flow.

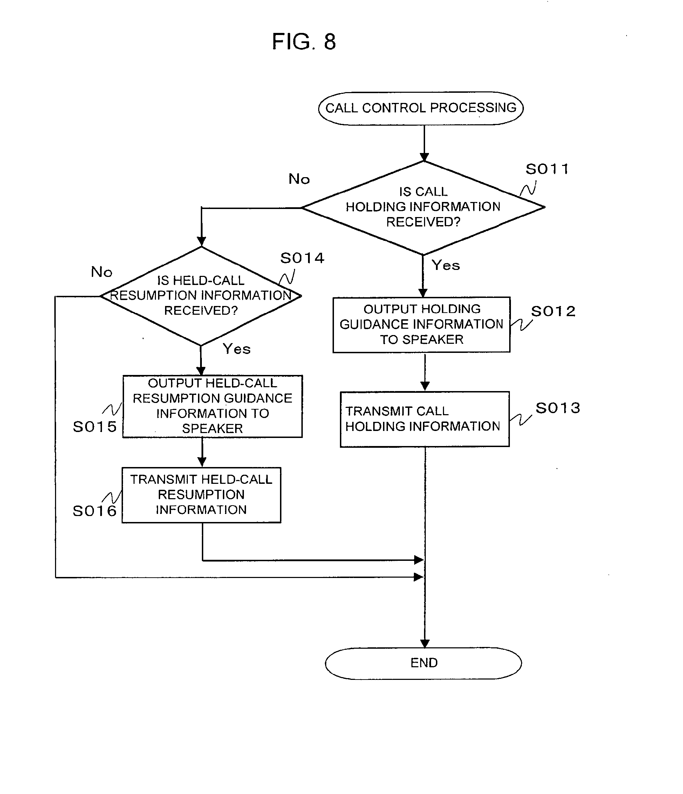

FIG. 8 is a flowchart for illustrating a flow of the call control processing. The call control processing is started when the navigation device 100 receives information from the server 200.

The overall control unit 1 of the navigation device 100 determines whether or not the information received through the transmission/reception unit 5 is the call holding information (Step S011). Then, when the received information is the call holding information (Yes in Step S011), the overall control unit 1 advances the processing to Step S012. On the other hand, when the received information is not the call holding information (No in Step S011), the overall control unit 1 advances the processing to Step S014.

In Step S012, the informing unit 4 outputs the holding guidance information included in the call holding information to the in-vehicle speaker 22. Further, the overall control unit 1 transmits the call holding information to the mobile terminal device 300 through the transmission/reception unit 5 (Step S013), and ends the processing of this flow.

Further, in Step S014, the overall control unit 1 determines whether or not the received information is the held-call resumption information. Then, when the received information is the held-call resumption information (Yes in Step S014), the overall control unit 1 advances the processing to Step S015. On the other hand, when the received information is not the held-call resumption information (No in Step S014), the overall control unit 1 ends the processing of this flow.

In Step S015, the informing unit 4 outputs the held-call resumption guidance information included in the held-call resumption information to the in-vehicle speaker 22. Further, the overall control unit 1 outputs the held-call resumption information to the mobile terminal device 300 through the transmission/reception unit 5 (Step S016), and ends the processing of this flow.

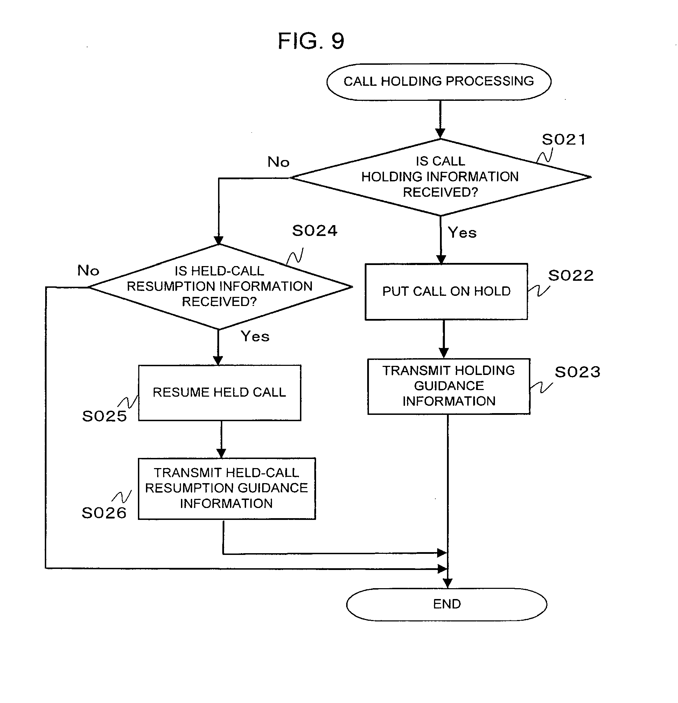

FIG. 9 is a flowchart for illustrating a flow of the call holding processing. The call holding processing is started when the mobile terminal device 300 receives information from the navigation device 100.

The call unit 303 of the mobile terminal device 300 determines whether or not the information received through the transmission/reception unit 305 is the call holding information (Step S021). Then, when the received information is the call holding information (Yes in Step S021), the call unit 303 advances the processing to Step S022.

On the other hand, when the received information is not the call holding information (No in Step S021), the call unit 303 advances the processing to Step S024.

In Step S022, the call unit 303 puts the call on hold. Further, the overall control unit 301 transmits the holding guidance information to the telephone device 400 of the other person on the phone through the transmission/reception unit 305 (Step S023), and ends this flow.

As a result of this step, when the call is put on hold, the voice guidance such as "The call is temporarily put on hold because the driver's driving load is large." is delivered from the telephone device 400. This voice guidance enables the other person on the phone to know a reason for putting the call on hold.

Further, in Step S024, the call unit 303 determines whether or not the received information is the held-call resumption information. Then, when the received information is the held-call resumption information (Yes in Step S024), the call unit 303 advances the processing to Step S025. On the other hand, when the received information is not the held-call resumption information (No in Step S024), the call unit 303 ends the processing of this flow.

In Step S025, the call unit 303 resumes the held call. Further, the overall control unit 301 transmits the held-call resumption guidance information to the telephone device 400 of the other person on the phone (Step S026), and ends the processing of this flow.

As a result of this step, from the telephone device 400 of the other person on the phone, the voice guidance such as "The held call is now resumed." is delivered.

As described above, according to the call control device of this embodiment, it is possible to put the call received during driving on hold at more appropriate time based on the magnitude of the driving load. In particular, the call holding information is generated based on the vehicle information transmitted regularly from the call control device, and hence the call can be put on hold appropriately in synchronization with time when a large driving load is imposed on the driver. Further, the predetermined voice guidance is delivered when the call is put on hold, and hence it is possible to prevent the user from having an unpleasant feeling due to the call suddenly put on hold.

Notethat, in the above-mentioned embodiment, the server 200 generates the call holding information and the held-call resumption information, but the present invention is not limited to such an embodiment. In a first modification example of this embodiment, the navigation device 100 generates the call holding information and the held-call resumption information depending on the magnitude of the driving load calculated by the server 200.

Specifically, when receiving the vehicle information, the server 200 performs the processing of Step S001 of FIG. 7. In other words, the driving load determination unit 203 of the server 200 uses the map information, the workload information, and the vehicle information to calculate the magnitude of the driving load, and transmits the calculated magnitude of the driving load to the navigation device 100 as load information.

The navigation device 100 performs the processing of Steps S002 to S007 of FIG. 7. Specifically, the overall control unit 1 of the navigation device 100 determines whether or not the magnitude of the received load information is larger than the predetermined threshold (Step S002 of FIG. 7). Then, when the load information is larger than the predetermined threshold (Yes in Step S002 of FIG. 7), the overall control unit 1 generates the call holding information including the holding guidance information and the holding request information (Step S003 of FIG. 7). Further, the overall control unit 1 transmits the call holding information to the mobile terminal device 300 through the transmission/reception unit 5 (Step S004 of FIG. 7), and ends the processing of this flow.

On the other hand, when the magnitude of the load information is smaller than the predetermined threshold (No in Step S002 of FIG. 7), the overall control unit 1 determines whether or not the call is on hold (Step S005 of FIG. 7). Then, when the call is not on hold (No in Step S005 of FIG. 7), the overall control unit 1 ends the flow of FIG. 7. When the call is on hold (Yes in Step S005 of FIG. 7), the overall control unit 1 generates the held-call resumption information including the held-call resumption request information and the held-call resumption guidance information (Step S006 of FIG. 7). Further, the overall control unit 1 transmits the held-call resumption information to the mobile terminal device 300 through the transmission/reception unit 5 (Step S007 of FIG. 7), and ends the processing of this flow.

Further, the informing unit 4 of the navigation device 100 outputs the holding guidance information or the held-call resumption guidance information to the in-vehicle speaker 22.

Note that, it suffices if in the storage device 18 of the navigation device 100, information on the threshold of the driving load and the predetermined voice guidance information are stored in advance.

Further, the mobile terminal device 300 executes the call holding processing illustrated in FIG. 9.

According to the above-mentioned call control device of the first modification example, it is also possible to put the call received during driving on hold at more appropriate time based on the magnitude of the driving load.

Further, in the first modification example, the navigation device 100 generates the call holding information and the held-call resumption information based on the load information, but in a second modification example of the first embodiment, the mobile terminal device 300 uses the load information calculated by the server 200 to determine whether or not to put the call on hold.

Specifically, when receiving the load information from the server 200, the navigation device 100 transmits the received load information to the mobile terminal device 300.

When receiving the load information from the navigation device 100, the mobile terminal device 300 determines whether or not the load information is larger than the predetermined threshold. Then, when the load information is larger than the predetermined threshold, the overall control unit 301 puts the call on hold, and transmits the holding guidance information stored in the storage unit 306 in advance to the navigation device 100 and the telephone device 400 of the other person on the phone.

On the other hand, when the magnitude of the load information is smaller than the predetermined threshold, the overall control unit 301 determines whether or not the call is on hold. Then, when the call is on hold, the overall control unit 301 resumes the held call, and transmits the held-call resumption guidance information stored in the storage unit 306 in advance to the navigation device 100 and the telephone device 400 of the other person on the phone.

Through the above-mentioned processing of the mobile terminal device 300, the holding guidance information or the held-call resumption guidance information is output from the navigation device 100 and the telephone device 400 of the other person on the phone in synchronization with the holding of the call or the resumption of the held call.

Note that, it suffices if in the storage unit 306 of the mobile terminal device 300, the information on the threshold of the driving load and the predetermined voice guidance information are stored in advance.

According to the above-mentioned call control device of the second modification example, it is also possible to put the call received during driving on hold at more appropriate time based on the magnitude of the driving load.

Next, a description is given of a second embodiment of the present invention. A call control system according to the second embodiment includes the navigation device 100 having a telephone function and the server 200 capable of communicating to and from the navigation device 100 over the network 500. Note that, the same components as those described above are denoted by the same reference numerals, and a description thereof is omitted.

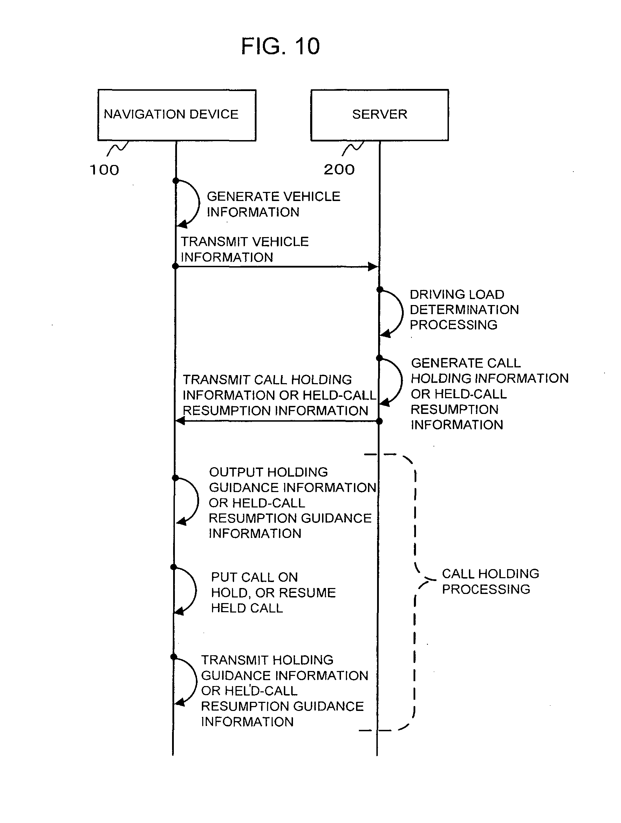

FIG. 10 is a sequence diagram for illustrating a series of processing steps relating to call control according to the second embodiment. Note that, the premise of this processing is that the navigation device 100 is during a call to another telephone device 400.

First, the navigation device 100 generates the vehicle information regularly. Further, the navigation device 100 transmits the vehicle information to the server 200 through the transmission/reception unit 5.

Next, the driving load determination unit 203 of the server 200 uses the map information, the workload information, and the vehicle information to execute the driving load determination processing illustrated in FIG. 7.

Next, depending on a result of the determination, the holding information generation unit 204 of the server 200 generates the call holding information or the held-call resumption information, and transmits the call holding information or the held-call resumption information to the navigation device 100 through the transmission/reception unit 205.

Next, the overall control unit 1 of the navigation device 100 executes the call control processing. Note that, in the call control processing, the call is put on hold, or the held call is resumed. Further, the holding guidance information or the held-call resumption guidance information is output from the in-vehicle speaker 22. Further, the holding guidance information or the held-call resumption guidance information is transmitted to the mobile terminal device 300. Note that, details of the call control processing are described later.

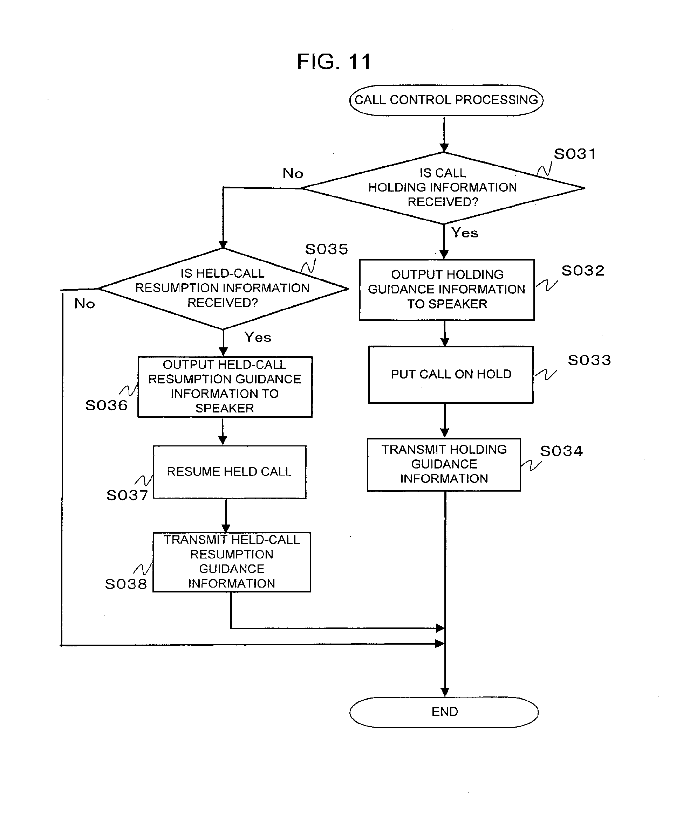

FIG. 11 is a flowchart for illustrating a flow of call control processing according to the second embodiment. The call control processing is started when the navigation device 100 acquires information from the server 200.

The overall control unit 1 of the navigation device 100 determines whether or not the information received through the transmission/reception unit 5 is the call holding information (Step S031). Then, when the received information is the call holding information (Yes in Step S031), the overall control unit 1 advances the processing to Step S032. On the other hand, when the received information is not the call holding information (No in Step S031), the overall control unit 1 advances the processing to Step S035.

In Step S032, the informing unit 4 outputs the holding guidance information included in the call holding information to the in-vehicle speaker 22. Further, the overall control unit 1 puts the call on hold (Step S033). Further, the overall control unit 1 outputs the holding guidance information to the telephone device 400 of the other person on the phone through the transmission/reception unit 5 (Step S034), and ends the processing of this flow.

Further, in Step S035, the overall control unit 1 determines whether or not the received information is the held-call resumption information. Then, when the received information is the held-call resumption information (Yes in Step S035), the overall control unit 1 advances the processing to Step S036. On the other hand, when the received information is not the held-call resumption information (No in Step S035), the overall control unit 1 ends the processing of this flow.

In Step S036, the informing unit 4 outputs the held-call resumption guidance information included in the held-call resumption information to the in-vehicle speaker 22. Further, the overall control unit 1 resumes the held call (Step S037). Further, the overall control unit 1 outputs the held-call resumption guidance information to the telephone device 400 of the other person on the phone through the transmission/reception unit 5 (Step S038), and ends the processing of this flow.

According to the above-mentioned call control device of the second embodiment, it is possible to put the call received during driving on hold at more appropriate time based on the magnitude of the driving load.

Note that, in the second embodiment, the server 200 generates the call holding information and the held-call resumption information, but the present invention is not limited to such an embodiment. In a modification example of this embodiment, the navigation device 100 uses the load information calculated by the server 200 to determine whether or not to put the call on hold.

Specifically, when receiving the load information from the server 200, the navigation device 100 determines whether or not the load information is larger than the predetermined threshold. Then, when the load information is larger than the predetermined threshold, the overall control unit 1 puts the call on hold. Further, the informing unit 4 outputs the holding guidance information stored in advance in the storage device 18 to the in-vehicle speaker 22. Further, the overall control unit 1 transmits the holding guidance information to the telephone device 400 of the other person on the phone through the transmission/reception unit 5.

On the other hand, when the magnitude of the load information is smaller than the predetermined threshold, the overall control unit 1 determines whether or not the call is on hold. Then, when the call is on hold, the overall control unit 1 resumes the held call. Further, the informing unit 4 outputs the held-call resumption guidance information stored in advance in the storage device 18 to the in-vehicle speaker 22. Further, the overall control unit 1 transmits the held-call resumption guidance information to the telephone device 400 of the other person on the phone.

Through the above-mentioned processing of the navigation device 100, the holding guidance information or the held-call resumption guidance information is output from the telephone device 400 in synchronization with the holding of the call or the resumption of the held call.

Note that, it suffices if in the storage device 18 of the navigation device 100, the information on the threshold of the driving load and the predetermined voice guidance information are stored in advance.

According to the above-mentioned call control device of the modification example of the second embodiment, it is also possible to put the call received during driving on hold at more appropriate time based on the magnitude of the driving load.

Next, a description is given of a third embodiment of the present invention. A call control system according to the third embodiment includes the navigation device 100 and the mobile terminal device 300 capable of communicating to and from the navigation device 100 with a short-range wireless communication standard such as Bluetooth or in a wired manner. Note that, the same components as those described above are denoted by the same reference numerals, and a description thereof is omitted.

In the call control system according to the third embodiment, the navigation device 100 calculates the magnitude of the driving load, and generates the call holding information or the held-call resumption information. Further, the mobile terminal device 300 uses the call holding information or the held-call resumption information received from the navigation device 100 to execute predetermined processing.

Specifically, the navigation device 100 executes the driving load determination processing illustrated in FIG. 7. In other words, the overall control unit 1 of the navigation device 100 uses the vehicle information acquired through the in-vehicle network 50, the map information 19 stored in the storage device 18, and the workload stored in advance in the storage device 18 to calculate the magnitude of the driving load (Step S001 of FIG. 7).

Further, when the magnitude of the driving load is larger than the predetermined threshold (Yes in Step S002 of FIG. 7), the overall control unit 1 generates the call holding information (Step S003 of FIG. 7), and transmits the call holding information to the mobile terminal device 300.

On the other hand, when the magnitude of the driving load is smaller than the predetermined threshold (No in Step S002 of FIG. 7), the overall control unit 1 determines whether or not the hands-free call being made by the mobile terminal device 300 is on hold (Step S005 of FIG. 7). Further, when the call is on hold (Yes in Step S005 of FIG. 7), the overall control unit 1 generates the held-call resumption information (Step S006 of FIG. 7), and transmits the held-call resumption information to the mobile terminal device 300 (Step S007 of FIG. 7). Note that, when the call is not on hold (No in Step S005 of FIG. 7), the overall control unit 1 ends the processing of this flow.

Note that, the overall control unit 1 acquires the call holding guidance information and the held-call resumption guidance information from the storage device 18, and includes the call holding guidance information and the held-call resumption guidance information in the call holding information and the held-call resumption information, respectively.

Further, the informing unit 4 of the navigation device 100 outputs the acquired holding guidance information or the held-call resumption guidance information to the in-vehicle speaker 22.

Further, the mobile terminal device 300 executes the call holding processing illustrated in FIG. 9.

According to the above-mentioned call control device of the third embodiment, it is possible to put the call received during driving on hold at more appropriate time based on the magnitude of the driving load.

Notethat, in the third embodiment, the navigation device 100 calculates the magnitude of the driving load and makes the determination as to the magnitude of the driving load to generate the call holding information and the held-call resumption information, but the present invention is not limited to such an embodiment. In a modification example of this embodiment, the mobile terminal device 300 uses the load information calculated by the navigation device 100 to determine whether or not to put the call on hold.

Specifically, the overall control unit 1 of the navigation device 100 uses the vehicle information, the map information 19, and the workload to calculate the magnitude of the driving load, and outputs the calculated magnitude of the driving load to the mobile terminal device 300 as the load information.

When receiving the load information from the navigation device 100, the overall control unit 301 of the mobile terminal device 300 determines whether or not the load information is larger than the predetermined threshold. Then, when the load information is larger than the predetermined threshold, the overall control unit 301 puts the call on hold, and transmits the holding guidance information stored in the storage unit 306 in advance to the navigation device 100 and the telephone device 400 of the other person on the phone.

On the other hand, when the magnitude of the load information is smaller than the predetermined threshold, the overall control unit 301 determines whether or not the call is on hold. Then, when the call is on hold, the overall control unit 301 resumes the held call, and transmits the held-call resumption guidance information stored in the storage unit 306 in advance to the navigation device 100 and the telephone device 400 of the other person on the phone.

Through the above-mentioned processing of the mobile terminal device 300, the holding guidance information or the held-call resumption guidance information is output from the navigation device 100 and the telephone device 400 of the other person on the phone in synchronization with the holding of the call or the resumption of the held call.

Note that, it suffices if in the storage unit 306 of the mobile terminal device 300, information on the threshold of the driving load and the predetermined voice guidance information are stored in advance.

According to the above-mentioned call control device of the modification example of the third embodiment, it is also possible to put the call received during driving on hold at more appropriate time based on the magnitude of the driving load.

Further, the present invention is not limited to the embodiments described above, and in a fourth embodiment of the present invention, voice guidance for telling a reason for putting the call on hold in more detail may be delivered.

For example, when there are a plurality of causes of the driving load (e.g., a junction, a branch point, a right/left turn, and a lane change), each of the devices for generating the call holding information specifies a main load cause from among the causes (e.g. , the one whose magnitude of the driving load takes the largest proportion among the magnitudes of the driving load), to thereby acquire the voice guidance associated with each cause.

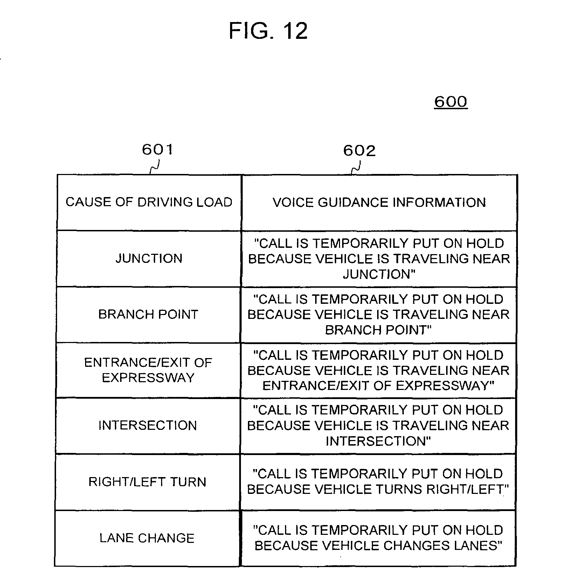

FIG. 12 is a table for showing guidance information 600 in which a cause 601 of the driving load and voice guidance information 602 is associated with each other. As shown in FIG. 12, with the junction as the load cause, voice guidance information "The call is temporarily put on hold because the vehicle is traveling near the junction." is associated to be stored. Further, with each of the causes of the driving load, the voice guidance information for telling a reason for putting the call on hold in detail is associated to be stored.

For example, in the first embodiment and the second embodiment, the server 200 uses the vehicle information to calculate the magnitude of the driving load. At this time, the driving load determination unit 203 of the server 200 specifies a main cause of the driving load.

Further, in the third embodiment, the navigation device 100 uses the vehicle information to calculate the magnitude of the driving load. At this time, the overall control unit 1 of the navigation device 100 specifies the main cause of the driving load.

Specifically, each of the overall control unit 1 and the driving load determination unit 203 uses the vehicle information to specify the current location of the vehicle based on the current location information and the map information. Further, each of the overall control unit 1 and the driving load determination unit 203 determines whether or not the specified location is near the load cause (e.g., within a 300-meter range from the load cause such as a junction). Further, when determining that the specified location is near the junction, each of the overall control unit 1 and the driving load determination unit 203 uses the workload information to specify the magnitude of the load of the load cause "junction", and performs predetermined weighting on the specified magnitude of the load, to thereby calculate the magnitude of the driving load.

Further, when the relevant vehicle information includes information on the operation of the turn signal, each of the overall control unit 1 and the driving load determination unit 203 determines whether or not the vehicle is traveling near the location corresponding to the load cause associated with this driving operation (e.g., the intersection at which the vehicle turns right or left). Further, when determining that the vehicle is traveling at the intersection at which the vehicle turns right or left, each of the overall control unit 1 and the driving load determination unit 203 uses the workload information to specify the magnitude of the load of the load cause "right/left turn", and performs predetermined weighting on the specified magnitude of the load, to thereby calculate the magnitude of the driving load.

Further, each of the overall control unit 1 and the driving load determination unit 203 compares the calculated magnitudes of the driving load with each other, and specifies one of the causes whose magnitude of the load is larger as the main cause of the load.

Further, when the main cause of the load is specified, each of the overall control unit 1 and the holding information generation unit 204 uses the guidance information 600 to acquire the voice guidance information 602 associated with the relevant driving load.

Further, in the first modification example of the first embodiment, based on the load information received from the server 200, the overall control unit 1 of the navigation device 100 specifies the main cause of the driving load. Further, the overall control unit 1 acquires the voice guidance information 602 associated with the relevant cause 601.

Further, in the second modification example of the first embodiment, based on the load information received from the navigation device 100, the overall control unit 301 of the mobile terminal device 300 specifies the main cause of the driving load. Further, the overall control unit 301 acquires the voice guidance information 602 associated with the relevant cause 601.

Further, in the modification example of the second embodiment, based on the load information received from the server 200, the overall control unit 1 of the navigation device 100 specifies the main cause of the driving load. Further, the overall control unit 1 acquires the voice guidance information 602 associated with the relevant cause 601.

Further, in the modification example of the third embodiment, based on the load information received from the navigation device 100, the overall control unit 301 of the mobile terminal device 300 specifies the main cause of the driving load. Further, the overall control unit 301 acquires the voice guidance information 602 associated with the relevant cause 601.

According to the above-mentioned call control device of the fourth embodiment, it is possible to put the call received during driving on hold at more appropriate time based on the magnitude of the driving load. In particular, when the call is to be put on hold, a more detailed reason for putting the call on hold is delivered as the voice guidance, and hence there is such an effect that the driver and the other person on the phone are prevented from having an unpleasant feeling due to the call put on hold.

### (Supplementary Note 1)

A call control device, including:
a hands-free call unit for establishing a hands-free call in cooperation with a mobile terminal device having a telephone function;
a transmission unit for transmitting vehicle information;
an acquisition unit for acquiring, depending on magnitude of a driving load calculated through use of the vehicle information, holding request information for requesting a call to be put on hold and holding guidance information for delivering voice guidance informing that the call is to be put on hold; and
an output unit for outputting the holding guidance information to a speaker,
in which the transmission unit transmits the holding request information and the holding guidance information to the mobile terminal device.

### (Supplementary Note 2)

A call control device, including:
a hands-free call unit for establishing a hands-free call in cooperation with a mobile terminal device having a telephone function;
a transmission unit for transmitting vehicle information;
an acquisition unit for acquiring load information specifying magnitude of a driving load calculated through use of the vehicle information; and
an output unit for outputting a predetermined voice to a speaker,
in which the transmission unit transmits the load information to the mobile terminal device,
in which the acquisition unit acquires, from the mobile terminal device, holding guidance information for informing that a call is to be put on hold, and
in which the output unit outputs the holding guidance information to the speaker.

### (Supplementary Note 3)

A call control device, including:
a call control unit for controlling a call to an external device;
a transmission unit for transmitting vehicle information;
an acquisition unit for acquiring, depending on magnitude of a driving load calculated through use of the vehicle information, holding request information for requesting a call to be put on hold and holding guidance information for delivering voice guidance informing that the call is to be put on hold; and
an output unit for outputting the holding guidance information to a speaker,
in which the transmission unit transmits the holding guidance information to the external device.

### (Supplementary Note 4)

A call control device, including:
a hands-free call unit for establishing a hands-free call in cooperation with a mobile terminal device having a telephone function;
a driving load calculation unit for calculating magnitude of a driving load through use of vehicle information;
an acquisition unit for acquiring, depending on the magnitude of the driving load, holding request information for requesting a call to be put on hold and holding guidance information for delivering voice guidance informing that the call is to be put on hold;
an output unit for outputting the holding guidance information to a speaker; and
a transmission unit for transmitting the holding request information and the holding guidance information to the mobile terminal device.

### (Supplementary Note 5)

A call control device, including:
a hands-free call unit for establishing a hands-free call in cooperation with a mobile terminal device having a telephone function;
a driving load calculation unit for calculating load information specifying magnitude of a driving load through use of vehicle information;
a transmission unit for transmitting the load information to the mobile terminal device;
an output unit for outputting a predetermined voice to a speaker; and
an acquisition unit for acquiring, from the mobile terminal device, holding guidance information for informing that a call is to be put on hold,
in which the output unit outputs the holding guidance information to the speaker.

### (Supplementary Note 6)

A call control device according to any one of Supplementary Notes 1, 3 and 4, further including:
a storage unit for storing the holding guidance information; and
a holding information generation unit for generating the holding request information.

### (Supplementary Note 7)

A call control device according to any one of Supplementary Notes 1 to 6, in which the holding guidance information includes a reason for putting the call on hold.

### (Supplementary Note 8)

A call control device according to Supplementary Note 7, in which the reason for putting the call on hold includes at least one of that a vehicle is travelling at a junction, that the vehicle is travelling at a branch point, that the vehicle is travelling at an entrance/exit of an expressway, that the vehicle is travelling at an intersection, that the vehicle is turning right or left, and that the vehicle is changing lanes.

### (Supplementary Note 9)

A call control device according to any one of Supplementary Notes 1 to 8, in which the vehicle information includes at least one of pieces of information specifying a vehicle speed, a steering angle, a state of a turn signal, a number of revolutions of an engine, and a current location.

### (Supplementary Note 10)

A server, including:
a reception unit for receiving vehicle information;
a driving load calculation unit for calculating magnitude of a driving load through use of the vehicle information;
a request information generation unit for generating, depending on the magnitude of the driving load, holding request information for requesting a call to be put on hold;
a storage unit for storing holding guidance information; and
a transmission unit for transmitting the holding request information and the holding guidance information.

### (Supplementary Note 11)

A server according to Supplementary Note 10, in which the driving load calculation unit calculates the magnitude of the driving load through use of the vehicle information, map information, and workload information in which a cause of a driving load imposed on a driver and magnitude of the driving load are associated with each other.

### (Supplementary Note 12)

A server program for causing a computer to function as a server for generating information for controlling a call, the server program causing the computer to function as:
a reception unit for receiving vehicle information;
a driving load calculation unit for calculating magnitude of a driving load through use of the vehicle information;
a request information generation unit for generating, depending on the magnitude of the driving load, holding request information for requesting a call to be put on hold;
a storage unit for storing holding guidance information; and
a transmission unit for transmitting the holding request information and the holding guidance information.

### (Supplementary Note 13)

A program for a mobile terminal, for causing a mobile computer to function as a mobile terminal device having a telephone function, the program for the mobile terminal causing the computer to function as:
a reception unit for receiving holding request information for requesting a call to be put on hold and voice guidance information for informing that the call is to be put on hold;
a call control unit for putting the call on hold based on the holding request information; and
a transmission unit for transmitting the holding guidance information to another person on a phone.

### Reference Signs List

100 ··· call control device (navigation device), 200 ··· server, 300 ··· mobile terminal device, 400 ··· telephone device, 500 ··· network, 50 ··· in-vehicle network

## Claims

1. A call control device, comprising:
a hands-free call unit for establishing a hands-free call in cooperation with a mobile terminal device having a telephone function;
a transmission unit for transmitting vehicle information;
an acquisition unit for acquiring, depending on magnitude of a driving load calculated through use of the vehicle information, holding request information for requesting a call to be put on hold and holding guidance information for delivering voice guidance informing that the call is to be put on hold; and
an output unit for outputting the holding guidance information to a speaker,
wherein the transmission unit transmits the holding request information and the holding guidance information to the mobile terminal device.

2. A call control device according to claim 1, further comprising:
a storage unit for storing the holding guidance information; and
a holding information generation unit for generating the holding request information.

3. A call control device according to claim 1 or 2, wherein the holding guidance information comprises a reason for putting the call on hold.

4. A call control device according to claim 3, wherein the reason for putting the call on hold comprises at least one of that a vehicle is travelling at a junction, that the vehicle is travelling at a branch point, that the vehicle is travelling at an entrance/exit of an expressway, that the vehicle is travelling at an intersection, that the vehicle is turning right or left, and that the vehicle is changing lanes.

5. A call control device according to any one of claims 1 to 4, wherein the vehicle information comprises at least one of pieces of information specifying a vehicle speed, a steering angle, a state of a turn signal, a number of revolutions of an engine, and a current location.

6. A call control method for a call control device for establishing a hands-free call in cooperation with a mobile terminal device, the call control method comprising:
a hands-free call step of establishing, by the call control device, the hands-free call in cooperation with the mobile terminal device having a telephone function;
a transmission step of transmitting, by the call control device, vehicle information;
an acquisition step of acquiring, by the call control device, depending on magnitude of a driving load calculated through use of the vehicle information, holding request information for requesting a call to be put on hold and holding guidance information for delivering voice guidance informing that the call is to be put on hold; and
an output step of outputting, by the call control device, the holding guidance information to a speaker,
wherein the transmission step comprises transmitting the holding request information and the holding guidance information to the mobile terminal device.

7. A call control method according to claim 6, further comprising:
a storage step of storing, by the call control device, the holding guidance information; and
a holding information generation step of generating, by the call control device, the holding request information.

8. A call control method according to claim 6 or 7, wherein the holding guidance information comprises a reason for putting the call on hold.

9. A call control method according to claim 8, wherein the reason for putting the call on hold comprises at least one of that a vehicle is travelling at a junction, that the vehicle is travelling at a branch point, that the vehicle is travelling at an entrance/exit of an expressway, that the vehicle is travelling at an intersection, that the vehicle is turning right or left, and that the vehicle is changing lanes.

10. A call control method according to any one of claims 6 to 9, wherein the vehicle information comprises at least one of pieces of information specifying a vehicle speed, a steering angle, a state of a turn signal, a number of revolutions of an engine, and a current location.
